# FASCICULE DE BREVET EUROPEEN

(11) **EP 4 015 842 B1**
(45) Date de publication et mention de la délivrance du brevet: **15.03.2023**
(21) Numéro de dépôt: 21209409.8
(22) Date de dépôt: 19.11.2021
(51) Int. Cl.: F16B 2/24, F16B 5/06, F24S 25/632, F24S 25/634

(54) **AGRAFE DE MAINTIEN DE DEUX ELEMENTS PLANS, ASSEMBLAGE COMPRENANT UNE TELLE AGRAFE**
KLAMMER ZUM ZUSAMMENHALTEN VON ZWEI FLACHEN ELEMENTEN, ZUSAMMENBAU MIT EINER SOLCHEN KLAMMER
CLIP FOR HOLDING TWO FLAT ELEMENTS, ASSEMBLY COMPRISING SUCH A CLIP

(30) Priorité: 17.12.2020 FR 2013553
(43) Date de publication de la demande: 22.06.2022
(73) Titulaire: A. Raymond et Cie, 38000 Grenoble (FR)
(72) Inventeur: LE GALL, Antoine, 38600 FONTAINE (FR)
(74) Mandataire: IP Trust

(56) Documents cités:
- US-A1- 2013 102 165
- US-A1- 2019 312 546
- US-B2- 10 801 538

## Description

### DOMAINE DE L'INVENTION

La présente invention concerne une agrafe de maintien de deux éléments plans. Elle trouve notamment son application pour fixer le cadre d'un module photovoltaïque sur un rail d'une structure porteuse.

### ARRIERE PLAN TECHNOLOGIQUE DE L'INVENTION

On connaît du document EP3494315 des agrafes métalliques pour maintenir des éléments plans assemblés l'un à l'autre au niveau de leurs faces principales. Ces agrafes trouvent une application toute particulière pour assembler le cadre d'un panneau photovoltaïque à un rail d'un châssis porteur.

Les agrafes proposées par ce document sont formées d'une bande métallique découpée et pliée à angle droit pour définir un pavé droit présentant deux parois latérales, une paroi inférieure et une paroi supérieure. Les extrémités de la bande métallique sont reliées l'une à l'autre du côté de la paroi inférieure de l'agrafe, et ces extrémités présentent un pliage permettant de les mettre en butée l'une contre l'autre. L'une de ces extrémités peut également présenter une languette de blocage évitant le glissement des surfaces mises en butée, notamment lorsque l'agrafe est soumise à de fortes sollicitations qui tendraient à la déformer.

Les parois latérales sont respectivement munies de rainures dont une extrémité débouche sur une face avant de l'agrafe. L'agrafe peut s'insérer sur les deux éléments plans assemblés l'un à l'autre pour les engager dans les rainures, ce qui permet de maintenir assemblés les deux éléments plans l'un contre l'autre.

En insérant une pluralité de telles agrafes le long des rails du châssis porteur, en prise sur le cadre d'un panneau photovoltaïque, on maintient solidement ce panneau au châssis. Ces agrafes sont toutefois soumises à de fortes sollicitations notamment lorsque des efforts tendant à désolidariser le panneau du rail s'appliquent, par exemple des efforts exercés par le vent sur une des faces du panneau.

Cela est d'autant plus vrai que, pour rendre les installations photovoltaïques les moins onéreuses possibles, la taille des panneaux tend à s'accroitre, ce qui augmente leurs expositions au vent. Cela conduit à augmenter l'effort maximal d'arrachement qu'une agrafe doit nécessairement tenir. Dans le même temps, et dans le même souci d'économie, les tôles dont sont constitués les rails des châssis porteurs sont choisies pour présenter une épaisseur qui tend à se réduire. Les rails sont donc susceptibles de se déformer, selon l'intensité et la nature des efforts transmis par les panneaux qu'ils supportent, notamment en flexion ou en torsion selon leur axe longitudinal.

On a ainsi observé que, dans certains cas, cette déformation en flexion et/ou en torsion du rail pouvait conduire à déformer l'agrafe, en faisant glisser l'une contre l'autre les pliages d'extrémité refermant la bande métallique du côté de la paroi inférieure de l'agrafe, et malgré la présence de languettes de blocage. L'agrafe ainsi déformée en torsion n'est plus apte à retenir le rail et le cadre du panneau assemblé l'un à l'autre, ce qui bien entendu n'est pas désirable et qui peut créer un grave problème de sécurité.

### OBJET DE L'INVENTION

Un but de l'invention est de remédier au moins en partie à ce problème. Plus précisément, un but de l'invention est de proposer une agrafe plus robuste que celle de l'état de la technique, c'est-à-dire apte à supporter des efforts importants transmis par les éléments plans qu'elle maintient assemblés, notamment lorsque l'un au moins de ces éléments plans est susceptible de se déformer en torsion ou en flexion sous l'effet d'efforts extérieurs importants.

### BREVE DESCRIPTION DE L'INVENTION

En vue de la réalisation de ce but, l'objet de l'invention propose une agrafe pour maintenir deux éléments plans assemblés l'un à l'autre au niveau de leur face principale, l'agrafe comprenant une paroi inférieure, une paroi supérieure, et deux parois latérales. Les parois sont reliées entre elles pour définir un volume fermé. Les deux parois latérales sont respectivement munies d'une rainure présentant une extrémité débouchant sur une face dite « avant » de l'agrafe. Les rainures sont configurées pour insérer l'agrafe par sa face avant sur les deux éléments plans assemblés et sont chacune délimitée sur les parois latérales par un contour présentant un segment supérieur et un segment inférieur opposé au segment supérieur.

Selon l'invention les parois latérales portent chacune, sur leurs faces respectives tournées vers l'extérieur, une aile de maintien plane, longeant une portion rectiligne du segment inférieur de la rainure et fournissant une surface de contact avec l'un des éléments plans.

Lorsque des efforts s'appliquent sur l'assemblage tendant notamment à écarter les deux éléments plans l'un de l'autre, les efforts transmis à l'agrafe sont répartis sur toute l'étendue des surfaces de contact des ailes de maintien. Ces efforts et le moment de ces efforts sont maîtrisés et absorbés par la partie arrière de l'agrafe.

Selon d'autres caractéristiques avantageuses et non limitatives de l'invention, prises seules ou selon toute combinaison techniquement réalisable :
- les surfaces de contact des ailes de maintien sont perpendiculaires aux parois latérales ;
- au moins un des segments inférieurs définit un crochet de renfort dont le sommet est affleurant au plan passant par les surfaces de contact des ailes de maintien ;
- au moins un des segments inférieurs définit un crochet de verrouillage saillant dans la rainure, le crochet de verrouillage étant destiné à s'engager dans une ouverture aménagée dans l'élément plan en contact avec les ailes de maintien ;
- le crochet de verrouillage est disposé à l'extrémité débouchante de la rainure ;
- le contour des rainures est échancré sur leurs extrémités débouchantes pour faciliter l'insertion de l'agrafe ;
- une au moins des parois latérales présente un bossage de renfort disposé entre la rainure et une face dite « arrière » de l'agrafe ;
- les parois sont formées d'une bande de métal pliée à angle droit ;
- les extrémités de la bande de métal présentent chacune au moins un pliage définissant au moins deux surfaces planes d'extrémité, les deux surfaces planes d'extrémité étant en butée l'une contre l'autre ;
- une au moins des surfaces planes d'extrémités présente au moins une languette de blocage pour bloquer tout glissement de ces surfaces l'une contre l'autre ;
- la paroi supérieure est munie d'une griffe configurée pour appliquer une pression sur les deux éléments plans lorsque ceux-ci sont insérés dans les rainures.

Selon un autre aspect, l'objet de l'invention propose un assemblage comprenant une agrafe telle que décrite précédemment, un premier élément plan et un deuxième élément plan disposés et maintenus assemblés l'un à l'autre au niveau de leur face principale dans les rainures de l'agrafe. Le deuxième élément plan est muni d'au moins une ouverture accueillant le crochet de verrouillage de l'agrafe.

Avantageusement, le deuxième élément plan présente une épaisseur, et le crochet de verrouillage est contenu dans l'épaisseur du deuxième élément plan.

### BREVE DESCRIPTION DES FIGURES

D'autres caractéristiques et avantages de l'invention ressortiront de la description détaillée de l'invention qui va suivre en référence aux figures annexées sur lesquels :
[Fig. 1a]
[Fig. 1b]

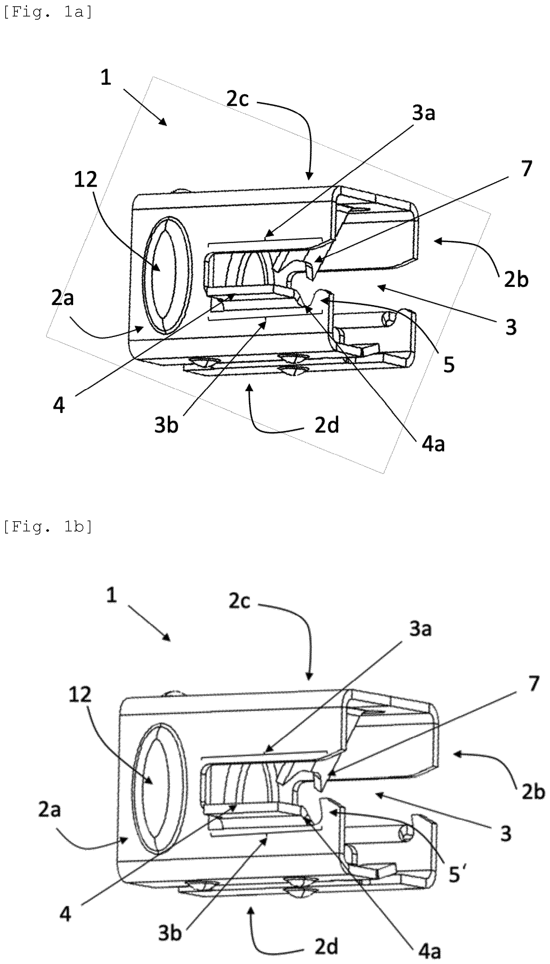

   Les figures 1a et 1b représentent des vues d'agrafes conformes à l'invention ;

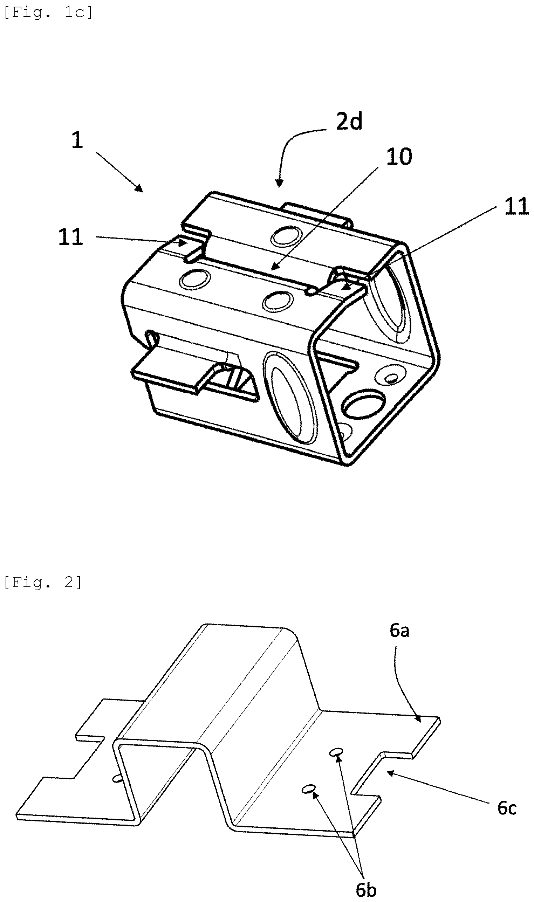

[Fig. 1c] La figure 1c représente l'agrafe de la figure 1b rendant apparente une face inférieure de cette agrafe ;
[Fig. 2]
   La figure 2 représente un élément plan configuré pour être retenu par une agrafe conforme à un mode de mise en oeuvre de l'invention ;
[Fig. 3a]
[Fig. 3b]

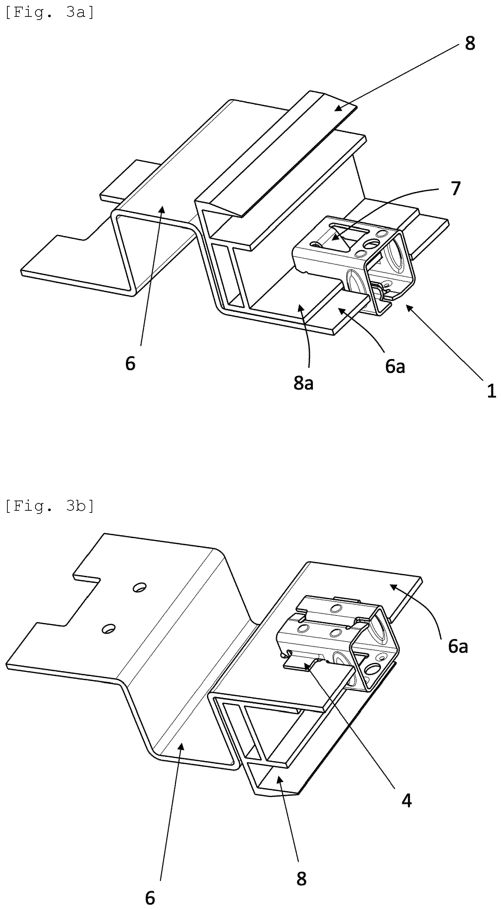

   Les figures 3a et 3b représentent un assemblage mettant en oeuvre une agrafe conforme à l'invention selon deux angles de vue différents.

### DESCRIPTION DETAILLEE DE L'INVENTION

En référence aux figures 1a, 1b, des agrafes conformes aux différents modes de mise oeuvre de la présente description sont formées de deux parois latérales 2a, 2b, d'une paroi supérieure 2c et d'une paroi inférieure 2d. Les quatre parois sont reliées entre elles et définissent un pavé droit, c'est-à-dire un volume fermé (sur au moins 4 de ses faces) de section rectangulaire ou carrée.

Comme cela a été présenté en introduction de cette demande, l'agrafe 1 est obtenue par découpe et pliage d'une bande métallique selon des angles droits pour définir les quatre parois 2a, 2b, 2c, 2d. Les extrémités de la bande de métal se rejoignent du côté de la paroi inférieure 2c et présentent des profils complémentaires qui, lorsque la bande de métal a été pliée pour former l'agrafe 1, peuvent s'emboîter l'un à l'autre.

Les deux extrémités de la bande de métal peuvent ainsi présenter chacune un pliage définissant deux surfaces planes d'extrémité 10. Les deux surfaces planes d'extrémité 10 viennent en butée l'une contre l'autre lorsque la bande de métal a été pliée pour former l'agrafe 1. Une des extrémités peut présenter au moins une languette de blocage 11, afin de bloquer tout glissement d'une surface plane d'extrémité 10 contre l'autre.

La bande de métal, les motifs à ses extrémités, les rainures, les languettes, les bossages et toutes les autres découpes ou déformation de l'agrafe 1 qui font l'objet de la suite de cette description peuvent être formées avant le pliage de la bande de métal, par exemple par des techniques de découpe - emboutissage. Pour être complet, la fabrication de l'agrafe peut également comprendre des traitements thermiques ou humides.

Poursuivant la description des figures 1a, 1b, les parois latérales 2a, 2b d'une agrafe 1 sont chacune munie d'une rainure 3 présentant une extrémité débouchant sur une face dite « avant » de l'agrafe 1. L'agrafe 1 présente également une face arrière, opposée à sa face avant. L'agrafe 1 peut présenter une longueur, c'est-à-dire la distance séparant sa face avant de sa face arrière, comprise entre 20 et 40mm ; une hauteur, c'est-à-dire la distance séparant la paroi inférieure 2c de paroi supérieure 2d comprise entre 15 et 30 mm ; et une largeur, c'est à dire la distance séparant les deux parois latérales 2a, 2b comprise entre 15 et 30 mm.

De préférence, les rainures 3 sont disposées sur les parois en vis-à-vis l'une de l'autre, et plus généralement elles sont situées dans un plan parallèle aux parois inférieure et supérieure de l'agrafe 1. Les rainures 3 sont configurées pour permettre d'introduire l'agrafe 1, par sa face avant, sur deux éléments plans assemblés l'un à l'autre par leurs faces principales afin de les maintenir l'un contre l'autre. La hauteur des rainures 3 correspond donc sensiblement à l'épaisseur de l'assemblage formé de ces deux éléments plans. Ainsi, lorsque cette épaisseur d'assemblage est comprise entre 2 et 5mm, on pourra choisir une agrafe comprenant des rainures présentant une hauteur de 5mm, voire un tout petit peu moins (par exemple 4,9mm), sachant que dans ce cas extrême l'insertion de l'agrafe peut requérir un effort d'insertion appuyé, par exemple à l'aide d'un marteau. La rainure peut présenter une profondeur, de son fond à son extrémité débouchant sur la face avant, comprise entre 15 et 25mm.

Pour faciliter l'insertion des éléments plans, le contour des rainures peut présenter une extrémité débouchante échancrée, comme c'est le cas des agrafes représentées sur les figures 1a, 1b.

Les rainures 3 sont délimitées sur les parois latérales par un contour de rainure, ce contour étant composé d'un segment inférieur 3b et un segment supérieur 3a faisant face au segment inférieur 3b. Ces segments 3a, 3b s'étendent d'une part jusqu'à l'extrémité débouchante de la rainure 3, et d'autre part jusqu'au fond de la rainure où ces segments 3a, 3b se rejoignent. Par convention, le segment inférieur 3b correspond à la portion du contour de la rainure disposée du côté de la paroi inférieure 2d de l'agrafe vis-à-vis de la rainure 3, et le segment supérieur 3a correspond à la portion du contour de la rainure 3 disposée du côté de la paroi supérieure 2c vis-à-vis de la rainure 3.

La partie arrière de l'agrafe, c'est-à-dire la partie des parois latérales 2a, 2b disposée entre le fond de la rainure 3 et la face arrière de l'agrafe 1 constitue une partie de renfort, absorbant les forces, et les moments de ces forces, exercés sur l'agrafe 1 par les éléments plans lorsque ceux-ci sont insérés dans les rainures 3, et qu'ils sont eux-mêmes soumis à des efforts, notamment ceux tendant à les écarter l'un de l'autre. La partie arrière peut présenter une dimension, entre le fond de la rainure et la face arrière de l'agrafe 1, typiquement comprise entre 5 et 15mm.

Dans une agrafe 1 conforme aux modes de mise en oeuvre représentés, les parois latérales 2a, 2b portent, sur leurs faces respectives tournées vers l'extérieur, une aile de maintien plane 4 longeant une portion rectiligne du segment inférieur 3b de la rainure 3 et fournissant une surface de contact avec l'un des éléments plans.

Lorsque l'agrafe 1 est engagée sur les deux éléments plans assemblés l'un à l'autre, l'un des éléments plans repose sur les surfaces de contact des ailes de maintien 4. Lorsque des efforts s'appliquent sur l'assemblage tendant notamment à écarter les deux éléments plans l'un de l'autre, les efforts transmis à l'agrafe 1 sont répartis sur toute l'étendue des surfaces de contact des ailes de maintien 4. Ces efforts et le moment de ces efforts sont maîtrisés et absorbés par la partie arrière de l'agrafe 1.

Dans une agrafe conforme à l'état de la technique, les efforts transmis à l'agrafe 1 s'appliquent sur les flancs des contours des rainures, ces flancs étant de très faibles dimensions, bien inférieures au mm. Le moment des efforts est très mal maîtrisé, notamment lorsque l'un au moins de ces éléments plans se déforme en flexion ou en torsion. Ce moment mal maîtrisé peut comporter une composante en torsion importante, qui est imparfaitement absorbée par la partie arrière de cette agrafe conforme à l'état de la technique, ce qui peut conduire à sa déformation par glissement des pliages d'extrémité refermant la bande métallique du côté de la paroi inférieure de l'agrafe, et malgré la présence de languette de blocage, comme cela a été présenté en introduction de cette demande.

Pour rendre encore plus résistant une agrafe 1 selon les différents modes de réalisation représentés sur les figures 1a, 1b, la partie arrière peut présenter un bossage 12 conduisant à la rigidifier, notamment vis-à-vis des efforts de cisaillement et des moments résiduels de torsion auxquels l'agrafe 1 pourrait être soumise.

Tout comme les autres parties de l'agrafe 1, les ailes de maintien 4 sont obtenues par pliage d'une portion de la bande de métal formant les parois latérales 2a, 2b. Le sommet de ce pli constitue la portion rectiligne du segment inférieur 3b du contour de la rainure 3.

Avantageusement, ces pliages sont réalisés de sorte que les surfaces de contact des ailes de maintien 4 soient respectivement perpendiculaires aux parois latérales 2a, 2b. On s'assure ainsi qu'elles entrent en contact étendu avec la surface principale de l'un des éléments plans.

Avantageusement également, pour préserver toute la rigidité de l'agrafe 1, les ailes de maintien 4 ne s'étendent pas sur toute la profondeur des rainures 3, et en particulier jusqu'à l'extrémité débouchante de ces rainures 3. On prévoit ainsi de former une découpe 4a permettant de replier une portion seulement de la bande de métal pour former une aile de maintien 4, tout en préservant du côté de l'extrémité débouchante un crochet 5, 5' non replié et donc disposé dans le plan de la paroi latérale 2a, 2b.

Dans le mode de mise en oeuvre de la figure 1a, l'agrafe 1 est dite « non verrouillable » et le segment inférieur 3b du contour de chaque rainure 3, au niveau de son extrémité débouchante, définit un crochet de renfort 5, dont le sommet est affleurant au plan passant par les surfaces de contact des ailes de maintien 4.

Dans le mode de mise en oeuvre de la figure 1b, l'agrafe 1 est dite « verrouillable ». Dans ce cas, au moins un des segments inférieurs 3b définit un crochet de verrouillage 5', c'est-à-dire un crochet saillant dans la rainure, qui intersecte donc le plan passant par les surfaces de contact des ailes de maintien. Cette portion saillante peut être de dimension réduite, par exemple de l'ordre du millimètre au-dessus du plan passant par les surfaces de contact, pour ne pas empêcher l'insertion de l'agrafe sur les éléments plans. Le crochet de verrouillage 5', ici disposé à l'extrémité débouchante de la rainure, est destiné à s'engager dans une ouverture 6b de l'élément plan qui a vocation à reposer sur les ailes de maintien 4. Un tel élément plan est représenté à titre d'illustration sur la figure 3. Cet élément plan 6a présente une épaisseur, et le crochet de verrouillage est contenu dans l'épaisseur du deuxième élément plan 6a lorsque l'agrafe est engagée sur les deux éléments plans pour les retenir l'un à l'autre. On note que la position crochet de verrouillage 5' à l'extrémité libre du segment inférieur 3b et le fait que l'ouverture 6b accueille intégralement ce crochet de verrouillage 5', réduisent les risques de désassemblage de l'agrafe 1 des éléments plans, par exemple par glissement de l'agrafe 1. On remarque aussi que l'élément plan 6a peut comprendre une encoche 6c permettant de faire pénétrer l'agrafe 1 plus profondément sur cet élément.

Selon un mode de réalisation très avantageux, la paroi supérieure 2d de l'agrafe 1 (que celle-ci soit verrouillable ou non) est munie d'une griffe 7 configurée pour appliquer une pression sur les deux éléments plans lorsque ceux-ci sont insérés dans les rainures 3. Cette griffe 7, formée par découpe et pliage de la bande de métal lors de la fabrication l'agrafe 1, est orientée vers la face arrière de l'agrafe 1 pour ne pas gêner son insertion. Elle est particulièrement utile lorsque l'épaisseur des deux éléments plans est inférieure à la hauteur des rainures, pour contribuer à maintenir les deux éléments plans l'un contre l'autre.

Lorsque les éléments plans sont métalliques, il est avantageux de choisir le métal constituant l'agrafe 1 pour qu'il présente une dureté supérieure à celui du métal des éléments plans. Il peut s'agir d'un acier ou d'un acier inoxydable. La griffure qui se forme alors sur l'un au moins des éléments plans lors de l'insertion de l'agrafe 1, contribue à maintenir l'agrafe 1 en position et à établir un contact électrique de qualité. Cette griffure est favorisée par l'extrémité à angles pointus de la griffe 7, et permet notamment de pénétrer à travers d'éventuelles couches de protection dont serait revêtu l'élément plan griffé. Le contact électrique est également assuré entre l'agrafe et l'autre élément plan, notamment par le contact plan se réalisant au niveau des ailes de maintien 4 entre ces deux éléments. On note que la griffe 7 permet de mettre ce contact plan en légère pression, ce qui favorise également le contact électrique. L'agrafe 1 assure donc une continuité électrique entre les deux éléments plans de bonne qualité, qui peut être inférieur à 0,1 Ohm, et cette continuité électrique peut être mise à profit pour propager une masse commune à l'ensemble des éléments métalliques en contact.

Les figures 3a et 3b représentent, sous deux angles de vue différents, un exemple d'utilisation d'une agrafe 1 conforme à l'invention. Sur ces figures, un cadre de panneau photovoltaïque 8 est placé sur un rail 6 d'un châssis porteur. Le cadre 8 comporte une portion 8a formant un premier élément plan qui repose sur un second élément plan 6a du rail 6. L'agrafe est insérée sur les deux éléments plans, et l'élément plan inférieur 6a, en contact avec le segment inférieur 3b de la rainure, repose sur les ailes de maintien 4.

Lorsque l'agrafe 1 est verrouillable, comme c'est le cas de l'agrafe représentée sur ces figures 3a, 3b on a prévu au moins une ouverture 6b dans l'élément plan inférieur, ici la portion 6a du rail 6, pour permettre de loger les crochets de verrouillage 5'. Le rail peut donc être muni d'une pluralité de telles ouvertures 6b, réparties selon sa longueur, pour permettre d'y fixer une pluralité d'agrafe en prise avec le cadre du panneau.

Bien entendu l'invention n'est pas limitée au mode de mise en oeuvre décrit et on peut y apporter des variantes de réalisation sans sortir du cadre de l'invention tel que défini par les revendications.

## Revendications

1. Agrafe (1) pour maintenir deux éléments plans assemblés l'un à l'autre niveau de leur face principale, l'agrafe comprenant une paroi inférieure (2d), une paroi supérieure (2c), et deux parois latérales (2a, 2b), les parois (2a, 2b, 2c, 2d) étant reliées entre elles pour définir un volume fermé et les deux parois latérales (2a, 2b) étant respectivement munies d'une rainure (3) présentant une extrémité débouchante sur une face dite « avant » de l'agrafe, les rainures (3) étant configurées pour insérer l'agrafe (1) par sa face avant sur les deux éléments plans assemblés et étant chacune délimitée sur les parois latérales par un contour présentant un segment supérieur (3a) et un segment inférieur (3b) opposé au segment supérieur (3a), l'agrafe (1) étant **caractérisée en ce que** les parois latérales (2a, 2b) portent chacune, sur leurs faces respectives tournées vers l'extérieur, une aile de maintien (4) plane longeant une portion rectiligne du segment inférieur (3b) de la rainure et fournissant une surface de contact avec l'un des éléments plans.

2. Agrafe (1) selon la revendication précédente dans laquelle les surfaces de contact des ailes de maintien sont perpendiculaires aux parois latérales (2a, 2b).

3. Agrafe (1) selon l'une des revendications précédentes dans laquelle un au moins des segments inférieurs (3b) définit un crochet de renfort (5) dont le sommet est affleurant au plan passant par les surfaces de contact des ailes de maintien.

4. Agrafe (1) selon l'une des revendications 1 à 2 dans laquelle un au moins des segments inférieurs (3b) définit un crochet de verrouillage (5') saillant dans la rainure (3), le crochet de verrouillage (5') étant destiné à s'engager dans une ouverture (6b) aménagée dans l'élément plan en contact avec les ailes de maintien (4).

5. Agrafe (1) selon la revendication précédente dans laquelle le crochet de verrouillage (5') est disposée à l'extrémité débouchante de la rainure.

6. Agrafe (1) selon l'une des revendications précédentes dans laquelle le contour des rainures est échancré sur leurs extrémités débouchantes pour faciliter l'insertion de l'agrafe.

7. Agrafe (1) selon l'une des revendications précédentes dans laquelle une au moins des parois latérale (2a, 2b) présente un bossage de renfort (12) disposé entre la rainure et une face dite « arrière » de l'agrafe (1).

8. Agrafe (1) selon l'une des revendications précédentes selon laquelle les parois (2a, 2b, 2c, 2d) sont formées d'une bande de métal pliée à angle droit.

9. Agrafe (1) selon la revendication 8 dans laquelle les extrémités de la bande de métal présentent chacune au moins un pliage définissant au moins deux surfaces planes (10) d'extrémité, les deux surfaces planes (10) d'extrémité étant en butée l'une contre l'autre.

10. Agrafe (1) selon la revendication précédente dans laquelle une au moins des surfaces planes d'extrémités (10) présente au moins une languette de blocage (11) pour bloquer tout glissement de ces surfaces l'une contre l'autre.

11. Agrafe (1) selon l'une des revendications précédentes dans laquelle la paroi supérieure (2d) est munie d'une griffe (7) configurée pour appliquer une pression sur les deux éléments plans lorsque ceux-ci sont insérés dans les rainures (3).

12. Assemblage comprenant une agrafe (1) conforme à l'une des revendications 4 à 11, un premier élément plan (8a) et un deuxième élément plan (6a) disposés et maintenus assemblés l'un à l'autre au niveau de leur face principale dans les rainures (3) de l'agrafe (1), le deuxième élément plan (6a) étant muni d'au moins une ouverture (6b) accueillant le crochet de verrouillage de l'agrafe (1).

13. Assemblage selon la revendication précédente dans lequel le deuxième élément plan (6a) présente une épaisseur, et le crochet de verrouillage est contenu dans l'épaisseur du deuxième élément plan (6a).

## Patentansprüche

1. Klammer (1) zum Halten von zwei ebenen Elementen, die an ihrer Hauptseite miteinander angeordnet sind, die Klammer umfassend eine untere Wand (2d), eine obere Wand (2c) und zwei seitliche Wände (2a, 2b), wobei die Wände (2a, 2b, 2c, 2d) zum Definieren eines geschlossenen Volumens miteinander verbunden sind, und die zwei seitlichen Wände (2a, 2b) jeweils mit einer Nut (3) versehen sind, die ein offenes Ende an einer sogenannten "Vorderseite" der Klammer aufweist, die Nuten (3) zum Einsetzen der Klammer (1) mit ihrer Vorderseite auf die zwei angeordneten ebenen Elemente konfiguriert sind und an den seitlichen Wänden jeweils durch eine Kontur begrenzt sind, die ein oberes Segment (3a) und ein unteres Segment (3b) aufweist, das dem oberen Segment (3a) gegenüberliegt, wobei die Klammer (1) **dadurch gekennzeichnet ist, dass** die seitlichen Wände (2a, 2b) jeweils auf ihren jeweiligen nach außen gerichteten Seiten einen Halteflügel (4) tragen, der entlang eines geradlinigen Abschnitts des unteren Segments (3b) der Nut eben ist und mit einem der ebenen Elemente eine Kontaktoberfläche bereitstellt.

2. Klammer (1) nach dem vorstehenden Anspruch, wobei die Kontaktoberflächen der Halteflügel senkrecht zu den seitlichen Wänden (2a, 2b) sind.

3. Klammer (1) nach einem der vorstehenden Ansprüche, wobei mindestens eines der unteren Segmente (3b) einen Verstärkungshaken (5) definiert, von dem der Scheitel mit der durch die Kontaktoberflächen der Halteflügel verlaufenden Ebene bündig ist.

4. Klammer (1) nach einem der Ansprüche 1 bis 2, wobei mindestens eines der unteren Segmente (3b) einen Verriegelungshaken (5') definiert, der in die Nut (3) hervorsteht, wobei der Verriegelungshaken (5') dafür bestimmt ist, in eine Öffnung (6b) einzugreifen, die in dem ebenen Element in Kontakt mit den Halteflügeln (4) eingerichtet ist.

5. Klammer (1) nach dem vorstehenden Anspruch, wobei der Verriegelungshaken (5') an dem offenen Ende der Nut arrangiert ist.

6. Klammer (1) nach einem der vorstehenden Ansprüche, wobei die Kontur der Nuten an ihren offenen Enden zum Erleichtern des Einsatzes der Klammer ausgebogen ist.

7. Klammer (1) nach einem der vorstehenden Ansprüche, wobei mindestens eine der seitlichen Wände (2a, 2b) einen Verstärkungsbuckel (12) aufweist, der zwischen der Nut und einer sogenannten "Rückseite" der Klammer (1) arrangiert ist.

8. Klammer (1) nach einem der vorstehenden Ansprüche, wobei die Wände (2a, 2b, 2c, 2d) aus einem rechtwinklig gebogenen Metallstreifen ausgebildet sind.

9. Klammer (1) nach Anspruch 8, wobei die Enden des Metallstreifens jeweils mindestens eine Biegung aufweisen, die mindestens zwei ebene Endoberflächen (10) Endes definiert, wobei die zwei ebenen Endoberflächen (10) Endes aneinander anliegen.

10. Klammer (1) nach dem vorstehenden Anspruch, wobei mindestens eine der ebenen Endoberflächen (10) mindestens eine Sperrzunge (11) zum Blockieren jeglichen Gleitens dieser Oberflächen gegeneinander aufweist.

11. Klammer (1) nach einem der vorstehenden Ansprüche, wobei die obere Wand (2d) mit einer Klaue (7) versehen ist, die zum Ausüben eines Drucks auf die zwei ebenen Elemente konfiguriert ist, wenn diese in die Nuten (3) eingesetzt werden.

12. Anordnung, umfassend eine Klammer (1), die mit einer aus den Ansprüchen 4 bis 11 übereinstimmt, ein erstes ebenes Element (8a) und ein zweites ebenes Element (6a), die an ihrer Hauptseite in den Nuten (3) der Klammer (1) arrangiert sind und miteinander angeordnet gehalten werden, wobei das zweite ebene Element (6a) mit mindestens einer Öffnung (6b) versehen ist, die den Verriegelungshaken der Klammer (1) aufnimmt.

13. Anordnung nach dem vorstehenden Anspruch, wobei das zweite ebene Element (6a) eine Dicke aufweist und der Verriegelungshaken in der Dicke des zweiten ebenen Elements (6a) enthalten ist.

## Claims

1. Clip (1) for holding two flat elements joined together at their main face, the clip comprising a lower wall (2d), an upper wall (2c), and two side walls (2a, 2b), the walls (2a, 2b, 2c, 2d) being interconnected so as to define a closed volume and the two side walls (2a, 2b) each being provided with a groove (3) having an end that opens into a face referred to as the "front face" of the clip, the grooves (3) being configured to insert the clip (1) by its front face onto the two joined flat elements and each being delimited on the side walls by a contour having an upper segment (3a) and a lower segment (3b) opposite the upper segment (3a), the clip (1) being **characterized in that** the side walls (2a, 2b) each have, on their respective outwardly facing faces, a flat holding flange (4) that extends along a rectilinear portion of the lower segment (3b) of the groove and provides a contact surface with one of the flat elements.

2. Clip (1) according to the preceding claim, wherein the contact surfaces of the holding flanges are perpendicular to the side walls (2a, 2b).

3. Clip (1) according to either of the preceding claims, wherein at least one of the lower segments (3b) defines a reinforcing hook (5), the apex of which is flush with the plane passing through the contact surfaces of the holding flanges.

4. Clip (1) according to either claim 1 or claim 2, wherein at least one of the lower segments (3b) defines a locking hook (5') that projects into the groove (3), the locking hook (5') being intended to engage in an opening (6b) provided in the flat element in contact with the holding flanges (4).

5. Clip (1) according to the preceding claim, wherein the locking hook (5') is arranged at the open end of the groove.

6. Clip (1) according to any of the preceding claims, wherein the contour of the grooves is notched at the open ends of said grooves in order to facilitate insertion of the clip.

7. Clip (1) according to any of the preceding claims, wherein at least one of the side walls (2a, 2b) has a reinforcing boss (12) arranged between the groove and a face referred to as the "rear face" of the clip (1).

8. Clip (1) according to any of the preceding claims, according to which the walls (2a, 2b, 2c, 2d) are made of a strip of metal bent at right angles.

9. Clip (1) according to claim 8, wherein the ends of the metal strip each have at least one bend defining at least two flat end surfaces (10), the two flat end surfaces (10) being in abutment.

10. Clip (1) according to the preceding claim, wherein at least one of the flat end surfaces (10) has at least one blocking tab (11) for blocking any sliding of these surfaces against one another.

11. Clip (1) according to any of the preceding claims, wherein the upper wall (2d) is provided with a claw (7) configured to apply pressure to the two flat elements when said elements are inserted in the grooves (3).

12. Assembly comprising a clip (1) according to any of claims 4 to 11, a first flat element (8a) and a second flat element (6a) that are arranged and held joined together at their main face in the grooves (3) in the clip (1), the second flat element (6a) being provided with at least one opening (6b) that accommodates the locking hook of the clip (1).

13. Assembly according to the preceding claim, wherein the second flat element (6a) has a thickness, and the locking hook is contained in the thickness of the second flat element (6a).
